# EUROPÄISCHE PATENTSCHRIFT

(11) **EP 0 647 480 B1**
(45) Veröffentlichungstag und Bekanntmachung des Hinweises auf die Patenterteilung: **15.10.1997**
(21) Anmeldenummer: 94112756.5
(22) Anmeldetag: 16.08.1994
(51) Int. Cl.: B07C 5/34, G01N 21/90

(54) **Verfahren zum Ausscheiden von Mehrwegflaschen aus dem Mehrwegumlauf**
Method for extracting reusable bottles from their usage circuit
Procédé d'extraction de bouteilles réutilisables de leur cycle d'utilisation

(30) Priorität: 08.10.1993 CH 3045/93
(43) Veröffentlichungstag der Anmeldung: 12.04.1995
(73) Patentinhaber: ELPATRONIC AG, CH-6303 Zug (CH)
(72) Erfinder: Gernet, Pierre, CH-5400 Ennetbaden (CH); Jungo, Daniel, CH-8116 Würenlos (CH)

(56) Entgegenhaltungen:
- EP-A- 0 555 646
- DE-A- 3 611 536
- PATENT ABSTRACTS OF JAPAN vol. 6, no. 75 (P-114) 12. Mai 1982 & JP-A-57 013 342 (KIRIN BREWERY) 23. Januar 1982

## Beschreibung

Die Erfindung betrifft ein Verfahren zum Ausscheiden von Mehrwegflaschen, insbesondere Kunststoff-Mehrwegflaschen, aus dem Mehrweg-Umlauf. Ferner betrifft die Erfindung eine Vorrichtung zur Durchführung des Verfahrens.

Insbesondere bei Kunststoff-Mehrwegflaschen, z.B. bei PET-Flaschen, welche eine begrenzte Lebensdauer haben, stellt sich das Problem, dass diejenigen Flaschen, deren Lebensdauer sich infolge sogenannter "stress-cracks" dem Ende zu neigt, rechtzeitig aus dem Mehrweg-Umlauf entfernt werden sollten. Dies nicht nur, um beim Konsumenten einen Bruch oder ein Reissen der Flaschen zu verhindern, sondern auch, um in der Abfüllanlage beim jeweiligen erneuten Befüllen der Flasche, bei welchem die jeweilige Flasche mit relativ hohem Druck beaufschlagt wird, ein Reissen oder Platzen der Flasche zu vermeiden. Bisher ist es nicht gelungen, die üblichen Ermüdungsschäden solcher Flaschen, welche sich insbesondere in der Form von feinen, mehr oder weniger tiefen Rissen darstellen, in einer solchen Weise zu erfassen, dass das Ende der Lebensdauer der Flasche sicher erkannt werden kann.

Es stellt sich daher die Aufgabe, eine Möglichkeit zu schaffen, dass Flaschen durch sichere Erkennung der "stress-cracks" rechtzeitig vor deren Lebensdauer-Ende aus dem Mehrweg-Umlauf ausgeschieden werden können und ohne dass deshalb die Flaschen wesentlich zu früh aus dem Mehrwegumlauf entnommen werden.

Diese Aufgabe wird gemäss der Erfindung dadurch gelöst, dass im wesentlichen bei jedem Flaschenrücklauf die auf einer Flaschenförderanlage geförderten Flaschen jeweils an einem optischen Distanzmessgerät vorbeigeführt werden, welches mit seinem Messstrahl jeweils den Randbereich des Flaschenbodens beaufschlagt, und dass das Distanzmessignal ausgewertet wird und dass abhängig von der Auswertung jeweils die Flasche aus dem Mehrwegumlauf ausgeschieden oder in diesem belassen wird.

Es hat sich gezeigt, dass mit einem optischen Distanzmessgerät, insbesondere mit einem Laser-Distanzmessgerät, ein Distanzmessignal erhalten werden kann, welches auch bei rascher Förderung der Flaschen auf einer industriellen Förderanlage (z.B. mit 600 Flaschen pro Minute) auswertbare Informationen über Menge und Tiefe der "stress-cracks" enthält, so dass durch Auswertung des Distanzmessignals die jeweilige Flasche aus dem Mehrweg-Umlauf ausgeschieden werden kann oder nicht. Es ergibt sich dadurch eine einfache und kostengünstige Möglichkeit der Erkennung der "stress-cracks".

Vorzugsweise wird weiter auch die Lichtstärke des reflektierten Messstrahles in die Auswertung einbezogen, um noch besser zwischen denjenigen Flaschen unterscheiden zu können, die als "gut" befunden werden und denjenigen welche als "schlecht" befunden werden.

Im folgenden werden Ausführungsbeispiele der Erfindung anhand der Zeichnungen näher erläutert. Dabei zeigt
Figur 1 schematisch die Anordnung eines Distanzmessgerätes zur Beaufschlagung des Randbereiches des Flaschenbodens;
Figur 2 schematisch einen Flaschenboden von unten mit Darstellung des Verlaufs des Messstrahls; und
Figuren 3a-d Diagramme der auszuwertenden Ausgangssignale des Distanzmessgerätes.

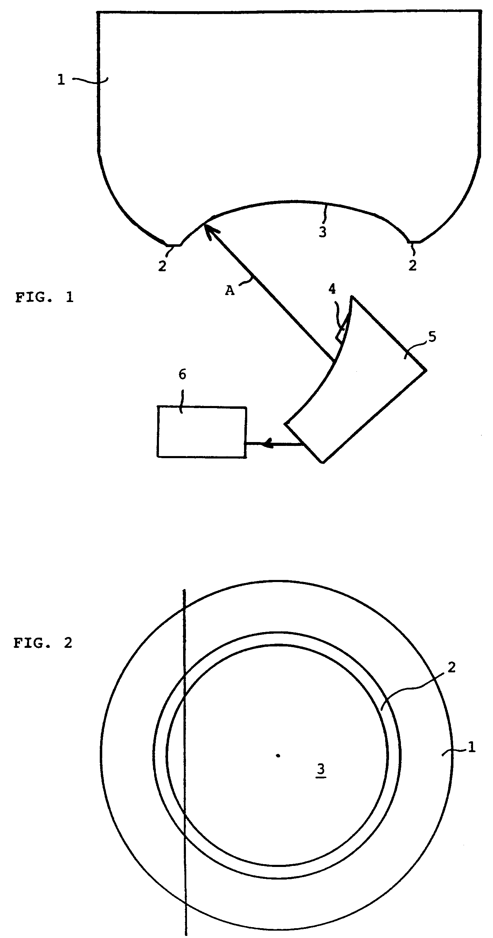

Figur 1 zeigt in stark schematisierter Form den unteren Bereich einer PET-Flasche 1 (in Vertikalquerschnitt). Ersichtlich ist dabei die Standfläche 2 der Flasche und der sich von der Standfläche gegen das Flascheninnere hin wölbende Dom 3. Das Distanzmessgerät 5, welches z.B. ein Laser-Distanzmessgerät opto NCDT, Serie 1605, der Firma Micro-Epsilon Messtechnik GmbH & Co KG, Ortenburg, Deutschland, ist, arbeitet nach dem bekannten Triangulationsmessprinzip und ist in einem Abstand zur Flasche gemäss den Herstellerangaben angeordnet. Auf die Flasche wird ein Lichtpunkt gemäss Pfeil A projiziert. Dieser Lichtpunkt wird über ein Objektiv 4 auf einen Positionssensor im Distanzmessgerät abgebildet. Der Positionssensor liefert eine positionsabhängige analoge Ausgangsspannung, die dem Messweg (Abstand Sensor-Flaschenboden) proportional ist. Eine zusätzliche analoge Ausgangsspannung stellt die reflektierte Lichtstärke dar. Die Ausgangsspannungen werden an eine Analyseeinrichtung 6 abgegeben, z.B. an einen Rechner. Bei der Verwendung des Distanzmessgerätes zur Erkennung auszuscheidender Flaschen ist die Flasche 1 auf einer nicht dargestellten Förderanlage, z.B. einer linearen Förderanlage oder einer Karussellförderanlage angeordnet und wird relativ zum Distanzmessgerät bewegt. Die Bahn des Messpunktes verläuft dabei z.B. wie schematisch in Figur 2 angedeutet über die Standfläche 2 hinweg in den inneren Randbereich der Standfläche 2 bzw. den äusseren Randbereich des Domes 3. Bei der in Figur 1 gezeigten Stellung des Messpunktes in der Mitte der Bahn beträgt der Abstand des Messpunktes von der Standfläche vorzugsweise ca. 3 bis 8 mm, noch besser ca. 5 bis 8 mm. Die Neigung des Distanzmessgerätes zur Flaschenlängsachse beträgt dabei vorzugsweise ca. 45 Grad.

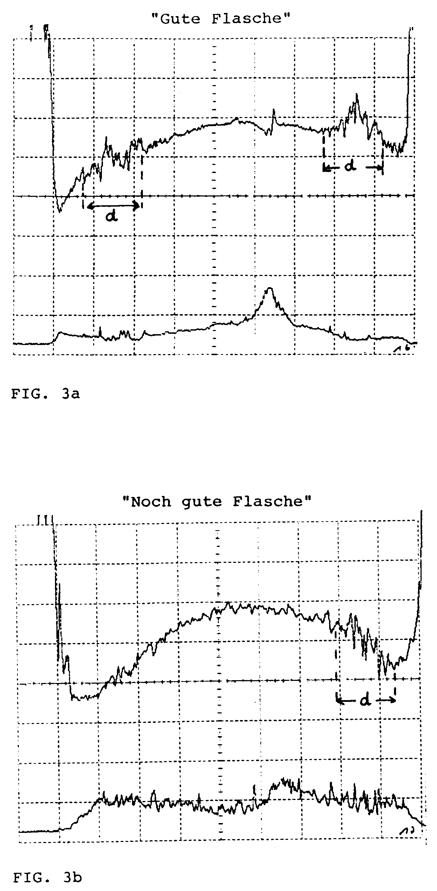

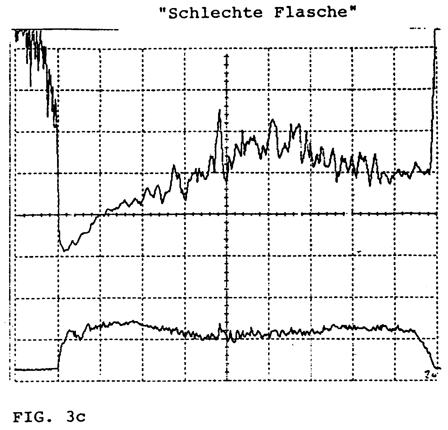

Zusätzlich könnte mit einem weiteren Distanzmessgerät eine andere Stelle des Flaschenbodens geprüft werden. So könnte z.B. eine weitere Bahn parallel zur gezeigten Bahn und gegenüberliegend zu dieser vorgesehen sein, oder eine zur gezeigten Bahn schiefwinklig verlaufende Bahn eines weiteren Messpunktes. Es ist auch möglich, den Messpunkt raumfest zu belassen und die Flasche um eine senkrechte Achse zu drehen, so dass die Messbahn kreisförmig verläuft. Bei mehreren Bahnen können diese unterschiedliche Abstände zur Standfläche aufweisen. Mit mehreren Distanzmessgeräten kann auch die Breite des Crackringes recht genau ermittelt werden. Indes lässt sich auch mit nur einer Bahn wie in Figur 2 gezeigt eine Aussage über die Breite des Crackringes machen, was nachfolgend anhand der Figuren 3a und 3b erläutert wird.

Die Figuren 3a bis 3d zeigen jeweils die Ausgangssignale des Distanzmessgerätes. Alle Diagramme enthalten zwei Graphen. Der jeweils oben angeordnete Graph zeigt ein Messignal, welches direkt die Entfernung Flasche-Distanzmessgerät bedeutet. Die Kurve zeigt ein Oberflächenpanorama des inneren Domes unter einem Abtastwinkel von etwa 45 Grad. Die maximale Messhöhendifferenz innerhalb des Domes beträgt etwa 8 mm. Aufgrund des Abtastwinkels erscheint der Dom gekrümmter als erwartet.

Die untere Kurve stellt die vom Messobjekt reflektierte Lichtmenge dar. Mit Hilfe dieses Signals kann die Aussagekraft des Sensors verbessert werden. Damit kann der Messbereich besser überwacht und das gültige vom ungültigen Signal eindeutig getrennt werden.

Die Aufzeichnungen wurden alle mit der gleichen Montage und Justierung vorgenommen. Bei anderen Einstellungen und demnach anderen Abtastebenen und Winkel können sich andere Verhältnisse ergeben. Die Montageart ist also in jedem Fall eine bestimmende Grösse.

Für die Auswertung der Signale zeigen sich verschiedene Varianten auf.

Der obere Graph zeigt die relative Distanz vom Sensor zum Objekt auf. Als Objekt wird jener Punkt gewählt, welcher am meisten Licht auf den PSD-Sensor zurückwirft. Dies bedeutet, dass eine Hintergrundausblendung vorgenommen werden sollte, da die hintere Wand ebenfalls vom Laserstrahl beaufschlagt wird.

Da der Bereich, in welchem der Dom abgetastet wird, bekannt ist, muss ein gültiges Abstandssignal in einer bekannten Bandbreite liegen. Wird das Signal in einer anderen Ebene reflektiert, kann auf eine Falschinformation sofort geschlossen werden. Dieses "Messfenster" wird definiert, indem man eine am Boden lackierte Flasche durchschleust und dieses Signal abspeichert. Dann wird diesem Referenzsignal ein Messbereich überlagert, welche eine programmierbare Bandbreite aufweist.

Das Messignal muss dann zwingend in dieser Bandbreite liegen. Aufgrund der Streuungen in der Flaschengeometrie und der Positionsfehler der Objekte bei der Messung muss die Fensterbreite einmal ermittelt und eingestellt werden.

Signale, die ausserhalb der Begrenzung liegen, können vernachlässigt werden. Der verbleibende Anteil der Signale kann nun weiter überprüft werden.

Nach dem gleichen Verfahren kann nun das zweite Signal (untere Kurve) bewertet werden. Dieses Signal entspricht der reflektierten Lichtmenge. Wenn dieses Signal innerhalb eines einstellbaren Bereiches liegt, kann die Messung (obere Kurve) als ein gültiges Signal erkannt werden. Im Bereich des Zentrums treten bei guten Flaschen Reflektionen auf, welche bei der unteren Kurve einen typischen Peak bewirken. Bei stark gestressten Flaschen hingegen erscheint der untere Messwert (Lichtmenge) eher als konstant. Bei diesem Signal können zusätzlich typische Rippel quantifiziert werden.

### Uebersicht der Bewertungsmöglichkeiten

### Obere Kurve (Distanz)

- Passgenauigkeit zur Referenzkurve (Differenz)
- Amplituden der Rippel (Risstiefe)
- Kontinuität des Verlaufes (Signalsprünge)
- Zonenbewertung 1 (wegen Reflektion in der Dommitte)
- Zonenbewertung 2 (wegen der optischen Verzerrung durch die Abtastung)
- Verteilung der Cracks über Durchmesser (Breite des Crackrings)
- Frequenzanalyse

### Untere Kurve (Lichtmenge)

- Kontinuität der Reflexion (Konstanz, Erkennen der typischen Spiegelung)
- Typische Rippelerkennung (Frequenz, Amplitude)

### Vergleich der beiden Kurven

- Einzelcracks
- Nur haze (sehr feine Strukturveränderung der Oberfläche - sieht aus wie Beschlag)
- Untere und obere Grenze bewerten (zulässige Bandbreite, Plausibilität)
- Anfang / Ende Erkennung (Dom-Synchronisierung)

Zum einen kann eine analoge Signalvorverarbeitung vorgenommen werden, welche einige der erwähnten Effekte hervorhebt. So kann der Rippelanteil beider Kurven durch Filterung und Aufbereitung mittels RMS-DC-Wandlern oder Ableitung des Signals (mittels Differentiator) gebildet werden. Die gesamte reflektierte Lichtleistung kann mit einem Integrator aufsummiert und bewertet werden.

Zum anderen können einige Messkurven mittels AD-Karte aufgezeichnet werden. Danach kann mit weitergehenden mathematischen Methoden eine Aufbereitung sowie auch eine Verknüpfung vorgenommen werden. Dadurch dann eine optimale und flexible Auswertung erfolgen.

Die eigentliche Auswertung kann sich auf den punktuellen Vergleich einiger Punkte der ermittelten Graphen mit Referenzwerten beschränken, was on-line von einem Rechner vorgenommen wird. Dazu kann z.B. bei beiden Kurven jeweils ober- und unterhalb eine Grenzkurve vorgegeben werden, welche Grenzkurven ein Fenster für die Signalkurve bilden. Denjenigen Stellen, wo die Signalkurve das vorgegebene Fenster verlässt, können dann speziell ausgewertet werden. Es lässt sich durch geeignete Auswertung (allenfalls mehrerer Distanzmessgeräte) feststellen, ob eine feine, aufgeraute Oberfläche (Haze) vorhanden ist, oder ob viele feine Cracks oder weniger tiefe cracks vorhanden sind. Auch können radiale cracks von kreisbogenförmigen cracks unterschieden werden. Als fehlerhaft erkannte Flaschen werden dann aus dem Förderweg ausgeschieden. Es kann auch ein Vergleich der jeweils ermittelten Graphen mit Musterkurven erfolgen, wozu z.B. neuronale Netze oder "fuzzy logic"-Systeme herangezogen werden.

Die Breite des Crackringes kann dem Mass d entnommen werden, welches in den Figuren 3a und 3b eingetragen ist.

## Patentansprüche

1. Verfahren zum Ausscheiden von Mehrwegflaschen, insbesondere Kunststoff-Mehrwegflaschen (1) aus dem Mehrweg-Umlauf, dadurch gekennzeichnet, dass im wesentlichen bei jedem Flaschenrücklauf die auf einer Flaschenförderanlage geförderten Flaschen jeweils an mindestens einem optischen Distanzmessgerät (5) vorbeigeführt werden, welches mit seinem Messstrahl (A) jeweils den Randbereich des Flaschenbodens beaufschlagt, und dass das Distanzmessignal ausgewertet wird und dass abhängig von der Auswertung jeweils die Flasche aus dem Mehrwegumlauf ausgeschieden oder in diesem belassen wird.

2. Verfahren nach Anspruch 1, dadurch gekennzeichnet, dass ferner vom Distanzmessgerät (5) ein Signal abgegeben wird, das die reflektierte Lichtstärke darstellt, und dass dieses Signal zusätzlich zum Distanzmessignal ausgewertet wird, um aufgrund beider Signale die Flasche (1) auszuscheiden oder im Umlauf zu belassen.

3. Verfahren nach Anspruch 1 oder 2, dadurch gekennzeichnet, dass die Bahn des Messstrahls in einem Bereich des Flaschendomes (3) ungefähr 3 bis 8 mm beabstandet von der Stellfläche (2) verläuft.

4. Verfahren nach einem der Ansprüche 1 bis 3, dadurch gekennzeichnet, dass das Distanzmessgerät ungefähr 45 Grad geneigt zur Flaschenlängsachse den Flaschenboden beaufschlagt.

5. Verfahren nach einem der Ansprüche 1 bis 4, dadurch gekennzeichnet, dass jeweils das Distanzmesssignal über die Zeit ermittelt und zur Auswertung mit jeweils einer oberen und unteren Bewertungskurve verglichen wird.

6. Verfahren nach einem der Ansprüche 2 bis 5, dadurch gekennzeichnet, dass jeweils das Lichtstärkesignal über die Zeit ermittelt und zur Auswertung mit jeweils einer oberen und unteren Bewertungsskurve verglichen wird.

7. Verfahren nach einem der Ansprüche 1 bis 6, dadurch gekennzeichnet, dass mindestens zwei Messstrahlen verwendet werden, die in unterschiedlichem Abstand von der Standfläche (2) verlaufen.

8. Verfahren nach einem der Ansprüche 1 bis 7, dadurch gekennzeichnet, dass der Messstrahl den Flaschenboden kreisringförmig beaufschlagt.

## Claims

1. Method for removing returnable bottles, in particular returnable plastic bottles (1), from circulation, characterized in that the bottles are conveyed past an optical distance-measuring instrument (5) essentially upon every bottle-return, so that the measuring beam (A) of the instrument scans the rim area of the bottom of the bottle, and in that the distance-measurement signal is evaluated and the individual bottle is removed from circulation or left in circulation depending on the outcome of the evaluation.

2. Method according to Claim 1, characterized in that the distance-measuring instrument (5) also outputs a signal representing the reflected luminous intensity, and in that this signal is evaluated in addition to the distance-measurement signal so that the bottle (1) is removed from or left in circulation on the basis of both signals.

3. Method according to Claim 1 or Claim 2, characterized in that the path of the measuring beam extends in a region of the bottle dome (3) at a distance of approximately 3 to 8 mm from the base-surface (2).

4. Method according to any one of Claims 1 to 3, characterized in that the distance-measuring instrument scans the bottle-bottom at an angle of approximately 45 degrees to the longitudinal axis of the bottle.

5. Method according to any one of Claims 1 to 4, characterized in that the individual distance-measurement signal obtained is plotted over time and compared with an upper and a lower rating curve for evaluation purposes.

6. Method according to any one of Claims 2 to 5, characterized in that the individual light-intensity signal obtained is plotted over time and compared with an upper and a lower rating curve for evaluation purposes.

7. Method according to any one of Claims 1 to 6, characterized in that at least two measuring beams, extending at different distances from the base-surface (2), are used.

8. Method according to any one of Claims 1 to 7, characterized in that the measuring beam scans the bottle-bottom in a circular path.

## Revendications

1. Procédé pour éliminer des bouteilles réutilisables, notamment des bouteilles réutilisables (1) en matière plastique, de leur cycle d'utilisation, caractérisé en ce qu'essentiellement à chaque retour de bouteille, on fait passer les bouteilles convoyées sur une installation de convoyage de bouteilles à côté d'au moins un appareil (5) de mesure optique de distance, qui charge avec son faisceau (A) de mesure respectivement la zone périphérique du fond de la bouteille, et en ce que le signal de mesure de distance est exploité et en ce qu'en fonction de l'exploitation, la bouteille est respectivement éliminée du cycle d'utilisation ou conservée dans celui-ci.

2. Procédé selon la revendication 1, caractérisé en ce qu'en outre, un signal est émis par l'appareil (5) de mesure de distance qui représente l'intensité réfléchie de lumière et en ce que ce signal est exploité en supplément du signal de mesure de distance pour, sur la base des deux signaux éliminer ou conserver la bouteille (1) dans le cycle.

3. Procédé selon la revendication 1 ou 2, caractérisé en ce que la trajectoire du faisceau de mesure s'étend dans une zone du dôme (3) de bouteille situé environ 3 à 8mm à distance de la surface (2) de pose.

4. Procédé selon l'une quelconque des revendications 1 à 3, caractérisé en ce que l'appareil de mesure de distance charge le fond de la bouteille de façon inclinée à environ 45° par rapport à l'axe longitudinal de la bouteille.

5. Procédé selon l'une quelconque des revendications 1 à 4, caractérisé en ce que respectivement le signal de mesure de distance est déterminé au cours du temps et est comparé pour l'exploitation avec des courbes d'évaluation respectivement supérieure et inférieure.

6. Procédé selon l'une quelconque des revendications 2 à 5 caractérisé en ce que respectivement le signal d'intensité de lumière est déterminé au cours du temps et est comparé pour l'exploitation avec des courbes d'évaluation respectivement supérieure et inférieure.

7. Procédé selon l'une quelconque des revendications 1 à 6 caractérisé en ce qu'au moins deux faisceaux de mesure sont utilisés qui s'étendent à des distances différentes de la surface (2) de pose.

8. Procédé selon l'une quelconque des revendications 1 à 7 caractérisé en ce que le faisceau de mesure charge le fond de la bouteille de façon annulaire-circulaire.
